# EUROPÄISCHE PATENTSCHRIFT

(11) **EP 2 499 178 B1**
(45) Veröffentlichungstag und Bekanntmachung des Hinweises auf die Patenterteilung: **10.01.2018**
(21) Anmeldenummer: 10793131.3
(22) Anmeldetag: 12.11.2010
(51) Int. Cl.: C08G 18/38, C08G 18/48, C08G 18/76, C08J 9/14, C08K 3/04, C08K 3/34, C08K 3/36, C08K 9/06, C08J 9/00

(54) **GESCHLOSSENPORIGER SCHAUMSTOFF AUF POLYURETHANBASIS**
POLYURETHANE-BASED CLOSED-PORE FOAM
MOUSSE À PORES FERMÉS À BASE DE POLYURÉTHANE

(30) Priorität: 13.11.2009 AT 17982009
(43) Veröffentlichungstag der Anmeldung: 19.09.2012
(73) Patentinhaber: KE KELIT Kunststoffwerk Gesellschaft m.b.H., 4020 Linz (AT)
(72) Erfinder: RAMETSTEINER, Karl, A-4040 Linz (AT)
(74) Vertreter: Patentanwaltskanzlei Hübscher
(86) Internationale Anmeldenummer: PCT/AT2010/000435
(87) Internationale Veröffentlichungsnummer: WO 2011/057315

(56) Entgegenhaltungen:
- EP-A1- 1 209 189
- EP-A1- 1 739 120
- EP-A1- 2 060 602
- EP-A2- 0 459 614
- DE-A1- 10 310 006
- US-A1- 2008 161 434
- wikipedia: "List of Minerals K-M (complete)", wikipedia , 10. Dezember 2010 (2010-12-10), XP002619035, Gefunden im Internet: URL:http://en.wikipedia.org/w/index.php?ti tle=List_of_minerals_K-M_(complete)&printa ble=yes [gefunden am 2011-01-27]
- Römpp-Online, Version 3.10, Minerale XP002619036

## Beschreibung

### Technisches Gebiet

Die Erfindung bezieht sich auf ein Verfahren zum Herstellen eines geschlossenporigen Schaumstoffs auf Polyurethanbasis durch Polyaddition einer Polyol- und einer Isocyanatkomponente sowie durch Schäumen mit Hilfe eines Treibmittels, wobei der Polyol- und/oder der Isocyanatkomponente vor der Polyaddition eine Diffusionssperre gegenüber Sauerstoff und dem Treibmittel bildende Mineralplättchen zugemischt werden.

### Stand der Technik

Geschlossenporige Schaumstoffe auf Polyurethanbasis werden häufig zur Wärmedämmung, beispielsweise zur Ummantelung von Leitungsrohren für Wärmeträger, verwendet, wobei die erzielbare Wärmedämmung von der Größe der Schaumstoffzellen und der Natur des Zellgases abhängt. Das Zellgas wird durch das jeweils eingesetzte Treibmittel bestimmt, während die Zellgröße in herkömmlicher Art mit Hilfe von Tensiden, vorzugsweise auf Silikonbasis, gesteuert werden kann. Als Treibmittel, das aufgrund der entstehenden Reaktionswärme bei der durch tertiäre Amine, Zinnverbindungen, basische Metallsalze u. dgl. katalysierten Polyaddition verdampft, kamen bevorzugt leichtflüchtige fluorierte, chlorfluorierte oder teilfluorierte Kohlenwasserstoffe, insbesondere Monofluortrichlormethan, zum Zuge, also Flüssigkeiten, die zu einer Umweltbelastung führen und daher zu vermeiden sind. Als Ersatz finden vor allem Pentane breite Anwendung, doch hat sich herausgestellt, dass das beim Einsatz eines Pentans als Treibmittel gebildete Zellgas diffusionsbedingt durch Luft ersetzt wird, die deutlich schlechtere Wärmedämmeigenschaften aufweist, sodass eine progressive Verschlechterung der Wärmedämmung durch den Schaumstoff in einer Größenordnung von mehr als 30 % innerhalb von 5 Jahren zu beobachten ist. Verstärkt wird diese Langzeitwirkung durch den die Bildung offener Poren unterstützenden Einfluss des Luftsauerstoffes auf die Zellstruktur.

Um diese Nachteile zu vermeiden, wurde insbesondere bei Leitungsrohren für einen Wärmeträger vorgeschlagen, den wärmedämmenden Schaumstoffmantel der vorisolierten Rohre mit einer Diffusionssperrschicht zu versehen, die aus einem Polyamid, einem Polyvinylalkohol, aus Polyvinyldichlorid oder Polyethylenterephthalat für sich allein oder in abwechselnden Lagen aufgebracht wird, aber auch aus Metallfolien oder metallisierten Lagen der genannten Kunststoffe gebildet werden kann. Allen vorgeschlagenen Diffusionssperrschichten ist jedoch der Nachteil gemeinsam, dass entweder mit einem hohen Herstellungsaufwand oder mit Schwierigkeiten hinsichtlich der Haftungs- und Dehnungseigenschaften zu rechnen ist, was vor allem bei erdverlegten Rohren die Lebensdauer empfindlich herabsetzen kann.

Um die Diffusion von Sauerstoff und Zellgas durch die Zellwände von geschlossenporigen Schaumstoffen, beispielsweise auf Polyurethanbasis, zu verringern, wurde bereits vorgeschlagen (WO 1991/14724 A2), der Polyolkomponente vor der Polyaddition mit der Isocyanatkomponente ein Polymer zuzumischen, das sich schichtbildend an die Zellwände anlegt und den Durchgang von Sauerstoff und Zellgas durch die Zellwände behindert. Diese Maßnahme wirkt allerdings nur kurzfristig.

Dem gleichen Ziel gilt eine weitere bekannte Maßnahme (EP 1 209 189 B1), bei dem plättchenförmige Tonmaterialien in einer Größe von etwa 0,15 bis 0,20 µm den Schaumstoffkomponenten zugesetzt werden, und zwar in einer Menge bis zu 10 Gew.% des Schaumstoffs, wobei aufgrund der damit erreichten Verlangsamung der Alterung nahegelegt wird, dass diese Tonplättchen als Gasbarriere wirksam sein können, die das Einfließen von Luft in die Schaumzellen und die Diffusion des Treibmittels aus den Schaumzellen verringert. Als Treibmittel werden allerdings Kohlenwasserstoffe vorausgesetzt.

Darüber hinaus ist es bekannt (DE 103 50 125 B4), plättchenförmiges Material, insbesondere Schichtsilikate, für die Ausbildung von Deckschichten auf Kunststofffolien einzusetzen, um einen Gasdurchtritt durch die vor allem für Lebensmittelverpackungen vorgesehenen Kunststofffolien zu unterbinden. Zur Haftvermittlung können funktionelle Silane hinzugefügt werden. Auch bei solchen Überzügen ergibt sich der Nachteil eines hohen Herstellungsaufwands und einer unter Umständen unzureichenden Haftung der Deckschicht auf der Trägerfolie über längere Einsatzzeiten.

### Darstellung der Erfindung

Der Erfindung liegt somit die Aufgabe zugrunde, einen geschlossenporigen Schaumstoff auf Polyurethanbasis der eingangs geschilderten Art so auszurüsten, dass trotz des Einsatzes beispielsweise von Pentan als Treibmittel eine gute Wärmedämmung auch über längere Standzeiten sichergestellt werden kann.

Die Erfindung löst die gestellte Aufgabe durch ein Verfahren entweder mit den Merkmalen des Anspruchs 1 oder des Anspruchs 3.

Durch den Einsatz einer Mischung aus Mineralplättchen und einer nanoskalaren Mineralkomponente, die bezüglich ihrer Teilchengröße erheblich kleiner als die Mineralplättchen ist, können die sich zwischen den Mineralplättchen ergebenden unvermeidbaren Lücken vorteilhaft durch die Teilchen der nanoskalaren Mineralkomponente ausgefüllt werden, sodass in überraschender Weise eine wirksame Diffusionssperre gegenüber Sauerstoff und dem Zellgas erreicht wird, und zwar auch beim Einsatz von Pentan als Treibmittel. Es ist lediglich für eine ausreichende Zellauskleidung zu sorgen, ohne die Eigenschaften des Schaumstoffs auf Polyurethanbasis zu beeinträchtigen. Dies gelingt in einfacher Weise dadurch, dass die beidseitige Auskleidung der Zellwände eine im Wesentlichen geschlossene Diffusionssperre bildet. Zu diesem Zweck muss nicht eine geschlossene Auskleidung auf einer Seite der Zellwände vorhanden sein, es genügt durchaus, wenn sich die Auskleidungen auf einander gegenüberliegenden Seiten einer Zellwand so überlappen, dass Lücken im Bereich der Zellauskleidung auf einer Wandseite durch geschlossene Bereiche der Zellauskleidung auf der gegenüberliegenden Wandseite abgedeckt werden. Damit eine solche geschlossene Diffusionssperre erreicht wird, ist eine Auskleidung vorzusehen, deren Teilchen eine Oberfläche aufweisen, die zumindest der doppelten Zellenoberfläche entspricht.

Besonders vorteilhafte Sperrbedingungen gegenüber einem Gasdurchtritt ergeben sich, wenn die Zellauskleidung Mineralplättchen aus wenigstens einem Schichtsilikat, wie Talkum, Glimmer, Tone, Kaolin oder Grafit, aufweist. Als nanoskalare Mineralkomponenten der Zellauskleidung bzw. deren synthetische Äquivalente kommen vor allem pyrogene Kieselsäure, Laponit, Montmorillonit, Fluorhectorit und/oder Bentonit in Frage.

Zur Herstellung eines geschlossenporigen Schaumstoffs auf Polyurethanbasis der geschilderten Art kann von einer üblichen Polyaddition einer Polyolkomponente und einer Isocyanatkomponente sowie von einem Schäumen mit Hilfe eines Treibmittels ausgegangen werden, wobei der Polyol-und/oder der Isocyanatkomponente vor der Polyaddition ein Gemisch aus Mineralplättchen und einer nanoskalaren Mineralkomponente mit einer höchstens einem Fünftel der durchschnittlichen Teilchengröße der Mineralplättchen entsprechenden durchschnittlichen Teilchengröße zugemischt wird. Die Mineralplättchen und die nanoskalare Mineralkomponente lagern sich beim Aufschäumen des durch Polyaddition gebildeten Schaumstoffs an den Zellwänden an und bilden die gewünschte Auskleidung, wobei sich die nanoskalare Mineralkomponente bevorzugt in den Lücken zwischen den Mineralplättchen anlagert.

Damit eine Verlagerung der Mineralplättchen bzw. der nanoskalaren Mineralkomponente innerhalb der Auskleidung vermieden wird, wird das Auskleidungsgemisch an den Schaumstoff gebunden. Zu diesem Zweck wird das Gemisch aus Mineralplättchen und einer nanoskalaren Mineralkomponente zur Reaktion mit wenigstens einer der beiden Polyurethankomponenten mit einem reaktiven Silan umgesetzt. Dadurch bilden die Hydroxylgruppen der Mineralstoffe durch Hydrolyse mit dem Alkoxysilan eine Silanol-(Si-O)-Bindung, sodass der organische Rest dann mit zumindest einer der beiden Schaumkomponenten unter Ausbildung einer kovalenten Bindung reagieren kann.

Voraussetzung für eine wirksame Diffusionssperre zwischen den einzelnen Zellen des Schaumstoffs ist, dass die Mischung aus den Mineralplättchen und der nanoskalaren Mineralkomponenten möglichst gleichmäßig zumindest in einer der beiden Schaumstoffkomponenten des Polyurethans verteilt wird. Um eine solche gleichmäßige Verteilung sicherzustellen, kann das Gemisch aus Mineralplättchen und einer nanoskalaren Mineralkomponente mit einem Teil der Polyolkomponente vorgemischt werden, sodass dann die vorgemischte Polyolkomponente mit der übrigen Polyolkomponente gemischt und dann der Isocyanatkomponente zugesetzt werden kann.

Eine andere Möglichkeit, eine entsprechende Diffusionssperre vorzusehen, besteht darin, zunächst ein Schichtsilikat im Treibmittel zu suspendieren und dann mit einem reaktiven Silan umzusetzen, bevor das entstandene Gemisch der Polyol- und/oder der Isocyanatkomponente zugemischt wird. Dies wird in einfacher Weise dadurch erreicht, dass das Silan, vorzugsweise ein 3-Glycidoxypropyltrimethoxysilan, der Silikatsuspension im Treibmittel homogen zugemischt und dass dann das Gemisch sich selbst bei Raumtemperatur überlassen wird, um einerseits die Substitution von SiOH-Gruppen an der Silikatoberfläche als auch eine exfolierende Wirkung zu erreichen, wobei die Silikatplättchen in eine nanoskalare Dispersion übergehen, und zwar aufgrund des entstehenden Methanols als Reaktionsprodukt bzw. als protonierender Aktivator für das noch nicht umgesetzte Silan.

Besonders vorteilhafte Bedingungen ergeben sich in diesem Zusammenhang, wenn als Schichtsilikat ein mit einem quaternären Ammoniumsalz modifizierter, natürlicher Montmorillonit im Treibmittel suspendiert wird. Der mit einem quaternären Ammoniumsalz modifizierte, natürliche Montmorillonit kann dabei in einem Pentan, Isopentan oder Cyclopentan als Treibgas suspendiert werden.

Als Silane können vorzugsweise Isocyanatomethyltrimethoxysilan, 3-Aminopropyltrimethoxysilan, Nβ-(Aminoethyl)γ-aminopropyltrimethoxysilan, 3-Glycidoxypropyltrimethoxysilan, 3-Glycidoxypropyldimethylethoxysilan oder 3-Aminopropylethoxydimethylsilan eingesetzt werden.

Wie bereits ausgeführt wurde, sollen die Oberfläche des Mineralgemisches zur Oberfläche der Zellen des Schaumstoffs in einem vorgegebenen Mindestverhältnis stehen, um zwischen den Zellen des Schaumstoffs zumindest im Wesentlichen geschlossene Diffusionssperren zu erzielen. Wird das Gemisch aus Mineralplättchen und einer nanoskalaren Mineralkomponente der Polyol- und/oder der Isocyanatkomponente in einer auf den Polyurethanschaumstoff bezogenen Menge bis 20 Gew.%, vorzugsweise bis 10 Gew.%, zugemischt, so können diese Flächenverhältnisse vorteilhaft eingehalten werden.

### Beispiel 1

Zur Herstellung einer geeigneten Mineralmischung für die Zellauskleidung kann von 20 g eines plättchenförmigen Talkums (Teilchengröße 0,8 bis 1,6 µm) mit einer spezifischen Oberfläche von 36 m²/g und von 2 g pyrogener Kieselsäure (Teilchengröße 0,01 bis 0,06 µm) mit einer spezifischen Oberfläche von 370 m²/g ausgegangen werden. Das Talkum und die pyrogene Kieselsäure werden in 500 ml Tetrahydrofuran dispergiert und unter Hinzufügung von 3,5 g Aminopropyltrimethyoxysilan bei 30 °C während vier Stunden gerührt, sodass die Hydroxylgruppen an den Oberflächen der Mineralteilchen durch Hydrolyse mit dem Alkoxysilan eine Silanol-(Si-O)-Bindung bilden. Danach wird die Lösung filtriert und bei 60 °C getrocknet, wobei 21,8 g eines für die spätere Zellauskleidung geeigneten Präparats mit einer spezifischen Gesamtoberfläche von 66 m²/g erhalten werden.

### Beispiel 2

Entsprechend dem Beispiel 1 werden 20 g Zeolith (Teilchengröße 1,5 bis 3,5 µ) mit einer spezifischen Oberfläche von 21 m²/g und 2 g Grafit (Partikelgröße 1,0 bis 2,5 µ) mit einer spezifischen Oberfläche von 35 m²/g als Mineralplättchen und 0,5 g pyrogene Kieselsäure (Teilchengröße 0,02 bis 0,07 µm) mit einer spezifischen Oberfläche von 160 m²/g als nanoskalare Mineralkomponente mit 3,5 g Nβ-(Aminoethyl)γ-aminopropyltrimethoxysilan umgesetzt um ein Ausgangsprodukt für die Zellauskleidung mit einer spezifischen Oberfläche von 25 m²/g zu erhalten.

### Beispiel 3

10 g Kaolin (Teilchengröße 1,8 bis 2,8 µ) mit einer spezifischen Oberfläche von 15,8 m²/g, 10 g Eisenglimmer (Teilchengröße 0,5 bis 1,1 µ) mit einer spezifischen Oberfläche von 4,2 m²/g und 0,8 g Bentonit (Teilchengröße 0,02 bis 0,08 µ) mit einer spezifischen Oberfläche von 156 m²/g werden mit 3,2 g 3-Glycidoxypropyl-trimethoxysilan umgesetzt, um ein Ausgangsprodukt mit einer spezifischen Oberfläche von 15 m²/g zu erhalten.

### Beispiel 4

20 g Talkum (Teilchengröße 0,8 bis 1,6 µm) mit einer spezifischen Oberfläche von 36 m²/g, 3 g Bentonit (Teilchengröße 0,02 bis 0,08 µm) mit einer spezifischen Oberfläche von 156 m²/g und 0,2 g pyrogener Kieselsäure (Teilchengröße 0,02 bis 0,07 µm) mit einer spezifischen Oberfläche von 160 m²/g werden mit 3,3 g 3-Glycidoxypropyl-dimethyl-ethoxysilan zu einem Produkt umgesetzt, das eine spezifische Oberfläche von 52 m²/g aufweist.

### Beispiel 5

10 g Talkum (Teilchengröße 0,8 bis 1,6 µm) mit einer spezifischen Oberfläche von 36 m²/g, 10 g Kaolin (Teilchengröße 1,8 bis 2,8 µm) mit einer spezifischen Oberfläche von 15,8 m²/g und 0,5 g Montmorillonit (Teilchengröße 0,03 bis 0,12 µm) mit einer spezifischen Oberfläche von 120 m²/g werden mit 2,9 g 3-Glycidoxypropyl-trimethoxysilan zu einem Produkt umgesetzt, das eine spezifische Oberfläche von 28 m²/g aufweist.

Die gemäß den Beispielen 1 bis 5 hergestellten, in der nachstehenden Tabelle mit B1 bis B5 bezeichneten Mineralprodukte wurden erfindungsgemäß der Polyolkomponente vor der Polyaddition mit der Isocyanatkomponente eingesetzt und der dabei hergestellte Schaumstoff mit einer Schaumstoffprobe verglichen, die keine Zellauskleidung aus Mineralstoffen aufwies. Die Polyol-und Isocyanatkomponenten stimmten jeweils überein. Die Polyolkomponente enthielt jeweils ein Polyolgemisch auf der Basis von Saccharose, Pentaerythrit und Propylenoxid (Hydroxylzahl 460, Funktionalität 4,5), ein übliches Stabilisatorgemisch, ein übliches Katalysatorgemisch und die in der Tabelle angegebenen Zusätze, jeweils in Gewichtsteilen.

Die Isocyanatkomponente enthielt in den angegebenen Gewichtsteilen ein Diphenylmethandiisocyanat (MDI) mit einem Gehalt an Isocyanatgruppen von 29,5 Gew.% und einer Funktionalität von 2,7.

Für die Vergleichsprobe wurde als Treibmittel Pentan, für die Schaumstoffe nach der Erfindung neben Pentan zum Teil auch Dimethoxymethan (DM) eingesetzt. Der Berechnung des Verhältnisses zwischen der spezifischen Zelloberfläche der jeweiligen Schaumstoffprobe und der spezifischen Oberfläche des Mineralgemisches zur Auskleidung der einzelnen Zellen wurde eine durchschnittliche Porengröße des Schaumstoffs von 0,1 mm Durchmesser zugrundegelegt.

Die in einer üblichen Polyaddition hergestellten Schaumstoffe wurden hinsichtlich des Wärmedurchgangs λ getestet, und zwar zunächst nach 24 Stunden bei einer Temperaturbelastung von 40 °C und dann nach 2200 Stunden bei einer gleichen Temperaturbelastung.

Wie sich aus den Angaben zu den Proben 6 bis 11 aus der obigen Tabelle zeigt, ergab sich für den Wärmedurchgang nach 24 Stunden ein annähernd gleicher Ausgangswert λ₂₄ₕ zwischen 0,026 und 0,028 W/m.°C. Deutliche Unterschiede scheinen erst nach 2200 Stunden auf. Während die Proben 6 bis 9 selbst nach 2200 Stunden ein annähernd gleiches Wärmedämmverhalten aufweisen, zeigen die Proben 10 und 11 eine spürbare Alterung mit einem deutlich schlechteren Wärmedämmvermögen. Bei der Vergleichsprobe 11 ist dies auf die fehlende Zellauskleidung, bei Probe 10 auf die lückenhafte Zellauskleidung zurückzuführen, die sich anhand des Verhältnisses der Oberfläche der Zellen zur Oberfläche der Teilchen der Auskleidung ablesen lässt.

| | Probe 6 | Probe 7 | Probe 8 | Probe 9 | Probe 10 | Probe 11 |
|---|---|---|---|---|---|---|
| | Polyolkomponente | | | | | |
| Polyolgemisch | 95,2 | 95,2 | 95,2 | 95,2 | 95,2 | 95,2 |
| Stabilisatorgemisch | 1,5 | 1,5 | 1,5 | 1,5 | 1,5 | 1,5 |
| Katalysatorgemisch | 1,5 | 1,5 | 1,8 | 1,5 | 1,5 | 1,5 |
| Wasser | 1,8 | 1,8 | | 1,8 | 1,8 | 1,8 |
| Mineralpemisch | 2 B1 | 5 B5 | 3,5 B4 | 5 B2 | 4 B3 | |
| Oberflächenverhältnis | 1:2,40 | 1:2,60 | 1:3,37 | 1:2,31 | 1:1,10 | |
| Treibmittel Pentan | 12,7 | 7,2 | 13,0 | 8,0 | 13,0 | 12,5 |
| Treibmittel DM | | 6,0 | | 5,0 | | |

| | Isocyanatkomponente | | | | | |
|---|---|---|---|---|---|---|
| Isocvanat MDI | 170 | 170 | 170 | 170 | 170 | 170 |
| Dichte [kg/m³] | 93,0 | 94,0 | 93,2 | 93,2 | 93,2 | 93,2 |
| λ₂₄ₕ [W/m.°C] | 0,027 | 0,026 | 0,028 | 0,026 | 0,028 | 0,027 |
| λ₂₂₀₀ₕ [W/m.°C] | 0,027 | 0,027 | 0,0285 | 0,0265 | 0,032 | 0,035 |

Wird zunächst ein Schichtsilikat im Treibmittel suspendiert und dann mit einem reaktiven Silan umgesetzt, bevor das entstandene Gemisch der Polyol-und/oder der Isocyanatkomponente zugemischt wird, so gehen die Silikatplättchen in eine nanoskalare Dispersion über, und zwar aufgrund des entstehenden Methanols als Reaktionsprodukt bzw. als protonierender Aktivator für das noch nicht umgesetzte Silan. Während der Reaktionsdauer, üblicherweise zumindest 6 Stunden, entsteht eine opak transparente, thixotrope, aber noch immer pumpfähige Dispersion mit einer nanoskalaren Mineralkomponente, die die Bedingungen für den Aufbau einer Diffusionssperre während des Aufschäumens der Polyurethankomponenten vorteilhaft erfüllt. Dies gilt insbesondere für ein Schichtsilikat aus einem mit einem quaternären Ammoniumsalz modifizierten, natürlichen Montmorillonit.

### Beispiel 12:

26 g eines mit quaternärem Ammoniumsalz modifizierten, natürlichen Montmorillonits mit einer Partikelgröße kleiner 10 µm (Cloisite 30B der Firma Southern Clay Products, Inc.) und 1 g hochdisperses Siliziumdioxid mit einer spezifischen Oberfläche von 800 m²/g werden in 54 g Pentan suspendiert, bevor 1 g Glycidoxypropyltrimethoxysilan zugesetzt wird. Diese Suspension wird 6 Stunden bei Raumtemperatur gemischt, wobei eine stetige Erhöhung der Viskosität eintritt und die Mineralsuspension zusehends opaker wird. Es entsteht eine 33%ige nanoskalare Dispersion des Mineralgemisches im Treibmittel.

Mit dieser Dispersion wurde eine Probe eines Polyurethanschaumstoffs mit einer Zusammensetzung entsprechend der Probe 8 hergestellt. Zum Unterschied zur Probe 8 wurde jedoch anstelle der 3,5 Teile des Mineralprodukts B4 und der 13 Teile Pentan 19,5 Teile der 33%igen nanoskalaren Dispersion des Mineralgemischs im Treibmittel eingesetzt. Die Dichte dieser Probe betrug 92,7 kg/m³ und zeigte eine Wärmeleitfähigkeit von 0,028 W/m.°C unmittelbar nach der Schäumung sowie eine Wärmeleitfähigkeit von 0,029 W/m.°C nach einer Alterung von 2.200 Stunden.

### Beispiel 13:

Es werden entsprechend Beispiel 12 15 g des mit quaternärem Ammoniumsalz modifizierten, natürlichen Montmorillonits und 1 g hochdisperses Siliziumdioxid mit 11 g eines natürlichen, mit quaternärem Ammoniumsalz modifizierten Bentonits mit einer Partikelgrößere kleiner 10 µm in Cyclopentan als Treibmittel gemischt und mit dem Silan reagieren gelassen. Man erhält wiederum eine 33%ige Mineraldispersion im Treibmittel.

Analog zum Beispiel 12 wurde ein Polyurethanschaumstoff hergestellt, jedoch mit 19,5 Teilen der 33%igen Mineraldispersion gemäß dem Beispiel 13. Die erhaltene Probe wies eine Dichte von 93,1 kg/m³ und eine Wärmeleitfähigkeit von 0,0279 W/m.°C unmittelbar nach der Schäumung auf. Nach einer Alterung von 2.200 Stunden wurde die Wärmeleitfähigkeit mit 0,0283 W/m.°C ermittelt.

Es zeigt sich somit, dass auch die Proben gemäß den Beispielen 12 und 13 ihre Wärmedämmeigenschaften beibehalten, was darauf zurückzuführen ist, dass keine Diffusion zwischen dem Treibmittel in den Zellen und der Umgebungsluft stattfindet.

## Patentansprüche

1. Verfahren zum Herstellen eines geschlossenporigen Schaumstoffs auf Polyurethanbasis durch Polyaddition einer Polyol- und einer Isocyanatkomponente sowie durch Schäumen mit Hilfe eines Treibmittels, wobei der Polyol-und/oder der Isocyanatkomponente vor der Polyaddition eine Diffusionssperre gegenüber Sauerstoff und dem Treibmittel bildende Mineralplättchen zugemischt werden, **dadurch gekennzeichnet, dass** der Polyol- und/oder der Isocyanatkomponente ein Gemisch aus Mineralplättchen und aus einer nanoskalaren Mineralkomponente mit einer höchstens einem Fünftel der durchschnittlichen Teilchengröße der Mineralplättchen entsprechenden durchschnittlichen Teilchengröße zugemischt werden, wobei das Gemisch aus Mineralplättchen und einer nanoskalaren Mineralkomponente zur Reaktion mit wenigstens einer der beiden Polyurethankomponenten mit einem reaktiven Silan umgesetzt wird.

2. Verfahren nach Anspruch 1, **dadurch gekennzeichnet, dass** das Gemisch aus Mineralplättchen und einer nanoskalaren Mineralkomponente mit einem Teil der Polyolkomponente vorgemischt wird.

3. Verfahren zum Herstellen eines geschlossenporigen Schaumstoffs auf Polyurethanbasis durch Polyaddition einer Polyol- und einer Isocyanatkomponente sowie durch Schäumen mit Hilfe eines Treibmittels, wobei der Polyol-und/oder der Isocyanatkomponente vor der Polyaddition eine Diffusionssperre gegenüber Sauerstoff und dem Treibmittel bildende Mineralplättchen zugemischt werden, **dadurch gekennzeichnet, dass** zunächst ein Schichtsilikat im Treibmittel suspendiert und dann mit einem reaktiven Silan umgesetzt wird, bevor das entstandene Gemisch der Polyol- und/oder der Isocyanatkomponente zugemischt wird.

4. Verfahren nach Anspruch 3, **dadurch gekennzeichnet, dass** als Schichtsilikat ein mit einem quaternären Ammoniumsalz modifizierter, natürlicher Montmorillonit im Treibmittel suspendiert wird.

5. Verfahren nach Anspruch 4, **dadurch gekennzeichnet, dass** der mit einem quaternären Ammoniumsalz modifizierte, natürliche Montmorillonit in einem Pentan, Isopentan oder Cyclopentan als Treibgas suspendiert wird.

6. Verfahren nach einem der Ansprüche 1 bis 5, **dadurch gekennzeichnet, dass** als Silan Isocyanatomethyltrimethoxysilan, 3-Aminopropyltrimethoxysilan, Nβ-(Aminoethyl)γ-aminopropyltrimethoxysilan, 3-Glycidoxypropyltrimethoxysilan, 3-Glycidoxypropyldimethylethoxysilan oder 3-Aminopropylethoxydimethylsilan eingesetzt wird.

## Claims

1. Method for producing a closed-pore polyurethane-based foam material by polyaddition of a polyol and an isocyanate component and by foaming with the aid of a foaming agent, wherein, prior to the polyaddition, mineral platelets forming a diffusion barrier against oxygen and against the foaming agent are admixed with the polyol and/or isocyanate component, **characterised in that** a mixture of mineral platelets and of a nano-scale mineral component with an average particle size corresponding to at most one fifth of the average particle size of the mineral platelets is admixed with the polyol and/or isocyanate component, wherein the mixture of mineral platelets and a nano-scale mineral component is converted with a reactive silane for reaction with at least one of the two polyurethane components.

2. Method as claimed in claim 1, **characterised in that** the mixture of mineral platelets and a nano-scale mineral component is premixed with a part of the polyol component.

3. Method for producing a closed-pore polyurethane-based foam material by polyaddition of a polyol and an isocyanate component and by foaming with the aid of a foaming agent, wherein, prior to the polyaddition, mineral platelets forming a diffusion barrier against oxygen and against the foaming agent are admixed with the polyol and/or isocyanate component, **characterised in that** firstly a sheet silicate is suspended in the foaming agent and then converted with a reactive silane before the resulting mixture is admixed with the polyol and/or isocyanate component.

4. Method as claimed in claim 3, **characterised in that** a natural montmorillonite modified with a quaternary ammonium salt is suspended in the foaming agent as the sheet silicate.

5. Method as claimed in claim 4, **characterised in that** the natural montmorillonite modified with a quaternary ammonium salt is suspended in a pentane, isopentane or cyclopentane as the blowing gas.

6. Method as claimed in any one of claims 1 to 5, **characterised in that** isocyanatomethyl trimethoxysilane, 3-aminopropyl trimethoxysilane, Nβ-(aminoethyl)γ-aminopropyl trimethoxysilane, 3-glycidoxypropyl trimethoxysilane, 3-glycidoxypropyl dimethyl ethoxysilane or 3-aminopropyl ethoxydimethyl silane is used as the silane.

## Revendications

1. Procédé de fabrication d'une mousse à pores fermés, à base de polyuréthane, par polyaddition d'un composant isocyanate et d'un composant polyol, ainsi que par moussage à l'aide d'un agent propulseur, des plaquettes minérales formant une barrière de diffusion contre l'oxygène et l'agent propulseur étant mélangées au composant isocyanate et/ou au composant polyol avant la polyaddition, **caractérisé en ce qu'**un mélange à base de plaquettes minérales et d'un composant minéral nanométrique, avec un calibre particulaire moyen correspondant au maximum à un cinquième du calibre particulaire des plaquettes minérales, est mélangé au composant isocyanate et/ou au composant polyol, le mélange à base de plaquettes minérales et d'un composant minéral nanométrique étant mis en oeuvre pour réaction avec au moins un des deux composants à base de polyuréthane avec un silane réactif.

2. Procédé selon la revendication 1, **caractérisé en ce que** le mélange à base de plaquettes minérales et d'un composant minéral nanométrique est prémélangé avec une partie du composant polyol.

3. Procédé de fabrication d'une mousse à pores fermés, à base de polyuréthane, par polyaddition d'un composant isocyanate et d'un composant polyol, ainsi que par moussage à l'aide d'un agent propulseur, des plaquettes minérales formant une barrière de diffusion contre l'oxygène et l'agent propulseur étant mélangées au composant isocyanate et/ou au composant polyol avant la polyaddition, **caractérisé en ce que** tout d'abord, un silicate en couches est en suspension dans l'agent propulseur, et ensuite, mis en oeuvre avec un silane réactif, avant que le mélange produit soit mélangé au composant isocyanate et/ou au composant polyol.

4. Procédé selon la revendication 3, **caractérisé en ce qu'**en tant que silicate en couches, une montmorillonite naturelle, modifiée avec un sel d'ammonium quaternaire, est en suspension dans l'agent propulseur.

5. Procédé selon la revendication 4, **caractérisé en ce que** la montmorillonite naturelle, modifiée avec un sel d'ammonium quaternaire, est en suspension dans un pentane, isopentane ou cyclopentane en tant que gaz propulseur.

6. Procédé selon l'une des revendications 1 à 5, **caractérisé en ce qu'**est utilisé en tant que silane, de l'isocyanatométhyltriméthoxysilane, 3-Aminopropyltriméthoxysilane, N-β-(aminoéthyl)γ-aminopropyltriméthoxysilane, 3-glycidoxypropyltriméthoxysilane, 3-glycidoxypropyltdiméthoxysilane, ou 3-Aminopropyléthoxydimétylsilane.
